# EUROPÄISCHE PATENTANMELDUNG

(11) **EP 1 247 684 A1**
(43) Veröffentlichungstag der Anmeldung: **09.10.2002**
(21) Anmeldenummer: 01108671.7
(22) Anmeldetag: 06.04.2001
(51) Int. Cl.: B60K 31/04

(54) **Bedienungseinrichtung für einen Kraftfahrzeug-Geschwindigkeitsbegrenzer**

(71) Anmelder: Ford Global Technologies, Inc., A subsidiary of Ford Motor Company, Dearborn, Michigan 48126 (US)
(72) Erfinder: Busch, Rainer, 52076 Aachen (DE); Schmitz, Peter, 52076 Aachen (DE)
(74) Vertreter: Drömer, Hans-Carsten, Dipl.-Ing.

(57) **Zusammenfassung**

Die Erfindung betrifft eine Geschwindigkeitsbegrenzungsregelung in einem Kraftfahrzeug. Der einzuhaltende Geschwindigkeitsgrenzwert wird dabei durch ein- oder mehrmalige Betätigung einer Taste (7) an einer Eingabevorrichtung (8) eingestellt. Dabei wird derjenige von vorgegebenen Geschwindigkeitsgrenzwerten ausgewählt, der relativ zur aktuellen Fahrzeuggeschwindigkeit der nächst größere ist. Liegt die aktuelle Fahrzeuggeschwindigkeit über dem größten vorgegebenen Geschwindigkeitsgrenzwert, so wird als Geschwindigkeitsgrenzwert die Fahrzeuggeschwindigkeit plus eine Geschwindigkeitsdifferenz angenommen.

## Beschreibung

Die Erfindung betrifft ein Verfahren nach dem Oberbegriff des Patentanspruchs 1, eine Vorrichtung zur Durchführung dieses Verfahrens sowie ein Kraftfahrzeug mit einer derartigen Vorrichtung.

Vorrichtungen und Verfahren zur automatischen Geschwindigkeitsregelung bei Kraftfahrzeugen sind bekannt. So gibt es insbesondere die sogenannten Tempomaten, bei deren Aktivierung die aktuelle Fahrzeuggeschwindigkeit so lange konstant beibehalten wird, bis der Fahrer durch die Betätigung des Gaspedals oder der Bremse in den Fahrvorgang eingreift, was zur Deaktivierung des Tempomaten führt. Des weiteren sind Geschwindigkeitsbegrenzungsregelungen bekannt, bei denen der Fahrer bis zu einem eingestellten Geschwindigkeitsgrenzwert die vollständige Kontrolle über das Fahrzeug ausübt und nur bei Annäherung an den Geschwindigkeitsgrenzwert ein automatischer Eingriff in das Fahrverhalten erfolgt. Der Eingriff soll sicherstellen, dass der vorgegebene Geschwindigkeitsgrenzwert nicht überschritten wird, um so das ungewollte Überschreiten von gesetzlich vorgeschriebenen Geschwindigkeitslimits zu verhindern.

Ein System der zuletzt genannten Art ist beispielsweise aus der DE 195 09 492 A1 bekannt. Dort wird insbesondere ein Verfahren angewendet, bei dem ein Eingriff in das Fahrverhalten bereits bei Annäherung an den vorgegebenen Geschwindigkeitsgrenzwert stattfindet.

Ferner ist aus der US 6 076 622 eine Geschwindigkeitsbegrenzungsregelung bekannt, bei welcher zusätzlich die Information eines Abstandssensors berücksichtigt wird, welcher die Annäherung an ein anderes Fahrzeug erkennt.

Vor diesem Hintergrund war es Aufgabe der vorliegenden Erfindung, ein Kraftfahrzeug mit einer einfach und sicher zu bedienenden und verschiedenen Fahrsituationen gerecht werdenden Geschwindigkeitsbegrenzungsregelung zur Verfügung zu stellen.

Diese Aufgabe wird durch ein Verfahren, eine Vorrichtung und ein Kraftfahrzeug mit den Merkmalen der entsprechenden unabhängigen Ansprüche gelöst. Vorteilhafte Ausgestaltungen sind in den Unteransprüchen enthalten.

Zunächst soll ein vorgeschlagenes Verfahren zur Eingabe von Geschwindigkeitsgrenzwerten für die Geschwindigkeitsbegrenzungsregelung eines Kraftfahrzeugs näher erläutert werden, welches dadurch gekennzeichnet ist, dass nach Betätigung eines Betätigungselementes durch den Fahrer des Kraftfahrzeugs ein aktueller, wirksamer Geschwindigkeitsgrenzwert vₗᵢₘ eingestellt wird, welcher von der aktuellen Fahrzeuggeschwindigkeit v_{act} abhängt.

Für den Komfort und die Sicherheit eines Systems zur Geschwindigkeitsbegrenzungsregelung ist es wichtig, dass der Fahrer in einfacher und intuitiv plausibler Weise gewünschte Geschwindigkeitsgrenzwerte vorgeben kann. Dieses Ziel wird mit dem vorgeschlagenen Verfahren erreicht, da bei der Auswertung der Betätigung des Betätigungselementes die aktuelle Fahrzeuggeschwindigkeit Berücksichtigung findet. Hierdurch ist es möglich, der jeweiligen Situation optimal angepasst auf die Eingabe des Fahrers zu reagieren. Dies vereinfacht die Bedienung des Systems erheblich, da der Situation/Fahrzeuggeschwindigkeit nicht angemessene Einstellungen automatisch ausgeschlossen und mit höchster Präferenz die der herrschenden Situation/Fahrzeuggeschwindigkeit am ehesten entsprechenden Einstellungen übernommen werden können. Eine derartige Vereinfachung des Bedienungsvorganges dient nicht nur dem Komfort, sondern auch der Sicherheit, da der Fahrer nicht durch umständliche Eingabeprozeduren vom Fahrgeschehen abgelenkt wird und da die Gefahr falscher Einstellungen verringert wird.

Die Auswahl eines aktuellen Geschwindigkeitsgrenzwertes vₗᵢₘ nach Betätigung des Betätigungselementes kann insbesondere so geschehen, dass wenn möglich derjenige von vorgegebenen Geschwindigkeitsgrenzwerten ausgewählt wird, welcher relativ zur aktuellen Fahrzeuggeschwindigkeit v_{act} der nächst größere Wert ist. Welche Geschwindigkeitsgrenzwerte zur Auswahl vorgegeben sind, hängt insbesondere von den jeweiligen gesetzlichen Bestimmungen ab. So kommen in Deutschland typischerweise als Geschwindigkeitsgrenzwerte v₃₀ = 30 km/h für Wohngebiete und v₅₀ = 50 km/h für Ortschaften in Frage. Gegebenenfalls kann auch nur ein einziger Geschwindigkeitsgrenzwert zur "Auswahl" vorgegeben sein. Bei dem vorgeschlagenen Auswahlverfahren wird automatisch derjenige Geschwindigkeitsgrenzwert ausgesucht, welcher am nächsten an der aktuellen Fahrzeuggeschwindigkeit liegt und gleichzeitig größer als diese ist. Im genannten Beispiel würde somit bei einer Fahrzeuggeschwindigkeit v_{act} von 20 km/h der Grenzwert v₃₀ und bei einer Fahrzeuggeschwindigkeit v_{act} von 35 km/h der Grenzwert v₅₀ ausgewählt. Sollte die Fahrzeuggeschwindigkeit v_{act} über dem höchsten vorgegebenen Geschwindigkeitsgrenzwert v₅₀ liegen, so ist das vorgeschlagene Auswahlverfahren nicht anwendbar. In diesem Falle muss eine geeignete Ersatzauswahl, etwa diejenige des größten vorgegebenen Geschwindigkeitsgrenzwertes v₅₀, vorgenommen werden. Eine alternative Ausführungsform wird nachstehend näher erläutert.

Das Verfahren zur Auswahl eines Geschwindigkeitsgrenzwertes aus einer vorgegebenen Menge von mehreren Geschwindigkeitsgrenzwerten kann so weitergebildet werden, dass durch mehrfache, kurz hintereinander erfolgende Betätigungen des Betätigungselementes der jeweils nächst größere aus der Reihe der vorgegebenen Geschwindigkeitsgrenzwerte als aktueller Geschwindigkeitsgrenzwert übernommen wird. Demnach wird bei der ersten Betätigung des Betätigungselementes ein erster der vorgegebenen Geschwindigkeitsgrenzwerte ausgewählt, was wie erläutert insbesondere der relativ zur aktuellen Fahrzeuggeschwindigkeit nächst größere Wert sein kann. Wenn der Fahrer diesen Wert jedoch nicht beibehalten möchte, kann er durch erneutes Betätigen der Betätigungstaste innerhalb eines vorgegebenen Zeitintervalls nach der ersten Betätigung veranlassen, dass der nächst größere der vorgegebenen Geschwindigkeitsgrenzwerte als wirksamer Geschwindigkeitsgrenzwert eingestellt wird. Sollte auch dies noch nicht der gewünschte Geschwindigkeitsgrenzwert sein, so kann durch nochmaliges Betätigen der Betätigungstaste, welches wiederum innerhalb des vorgegebenen Zeitintervalls nach der letzten Betätigung erfolgen muss, ein weiterer Sprung zum nächst größeren Geschwindigkeitsgrenzwert ausgeführt werden und so fort, bis die gewünschte Grenzgeschwindigkeit eingestellt ist.

Sollte bei dem zuletzt erläuterten Verfahren der höchste vorgegebene Geschwindigkeitsgrenzwert erreicht sein und innerhalb des vorgegebenen Zeitintervalls nach der letzten Betätigung eine erneute Betätigung des Betätigungselementes erfolgen, so wird diese vorzugsweise als Kommando für eine Deaktivierung der Geschwindigkeitsbegrenzungsregelung verstanden, so dass ein entsprechendes Signal erzeugt wird.

Weiterhin kann ein Signal zur Deaktivierung der aktivierten Geschwindigkeitsbegrenzungsregelung erzeugt werden, wenn das vorstehend erwähnte vorgegebene Zeitintervall seit der letzten Betätigung des Betätigungselementes abgelaufen ist und das Betätigungselement danach erneut betätigt wird.

Das Betätigungselement dient demnach zum einen dazu, einen gewünschten Geschwindigkeitsgrenzwert einzustellen und gegebenenfalls (s. unten) die Geschwindigkeitsbegrenzungsregelung zu aktivieren. Zum anderen dient es gleichzeitig zur Deaktivierung der Geschwindigkeitsbegrenzungsregelung, wenn diese nicht mehr erwünscht ist. Damit wird es möglich, die gesamte Bedienung dieser Regelung über ein einziges Betätigungselement vorzunehmen, welches je nach Situation auf seine Betätigung passend reagiert. Dies bedeutet nicht nur einen Komfortgewinn und eine Erleichterung der Bedienbarkeit, sondern auch einen erheblichen Sicherheitsgewinn. Der Fahrer kann nämlich die Betätigung des Betätigungselementes ohne hinzuschauen vornehmen, da es nicht darauf ankommt, unter mehreren Tasten eine auszuwählen oder eine bestimmte Positionseinstellung vorzunehmen.

Gemäß einer Weiterbildung des vorgeschlagenen Verfahrens wird nach Betätigung des Betätigungselementes die um eine Geschwindigkeitsdifferenz Δv erhöhte aktuelle Fahrzeuggeschwindigkeit v_{act} als aktueller Geschwindigkeitsgrenzwert vₗᵢₘ eingestellt, d.h. vₗᵢₘ = v_{act} + Δv. Ähnlich wie bei einem Tempomaten kann der Fahrer somit das Fahrzeug auf eine bestimmte Geschwindigkeit bringen und diese der Automatik als Richtwert vorgeben. Anders als beim Tempomaten wird jedoch nicht versucht, diese Geschwindigkeit konstant beizubehalten, sondern die Automatik stellt lediglich sicher, dass die eingestellte Geschwindigkeit nicht überschritten wird. Eine derartige Übernahme einer Fahrzeuggeschwindigkeit als Geschwindigkeitsgrenzwert ist insbesondere wie folgt in Kombination mit der oben erläuterten Verwendung vorgegebener Geschwindigkeitsgrenzwerte möglich: Befindet sich das Fahrzeug bei Betätigung des Betätigungselementes auf einer Fahrzeuggeschwindigkeit unterhalb des maximalen vorgegebenen Geschwindigkeitsgrenzwertes, so kann dieser oder ein entsprechender kleinerer Geschwindigkeitsgrenzwert übernommen werden. Ist die Fahrzeuggeschwindigkeit dagegen höher als der höchste verfügbare vorgegebene Geschwindigkeitsgrenzwert, so findet das zuvor erläuterte Verfahren der Übernahme der aktuellen Fahrzeuggeschwindigkeit als Richtwert Anwendung. Damit kann bei höheren Geschwindigkeiten näherungsweise ein beliebiger Grenzwert eingestellt werden (z.B. für die Begrenzung auf eine Fahrzeuggeschwindigkeit von 100 km/h auf Landstraßen).

Die Geschwindigkeitsdifferenz Δv kann als eine vorgegebene Konstante behandelt werden. Vorzugsweise wird sie jedoch unter Berücksichtigung der momentanen Beschleunigung des Kraftfahrzeugs so gewählt, dass die Fahrzeuggeschwindigkeit bis zum Wirksamwerden der Geschwindigkeitsbegrenzungsregelung den eingestellten Geschwindigkeitsgrenzwert vₗᵢₘ nicht überschreiten kann. Dies verhindert, dass bei Betätigung des Betätigungselementes eine aktuelle Fahrzeuggeschwindigkeit als Geschwindigkeitsgrenzwert übernommen wird, welche aufgrund der aktuellen Fahrzeugbeschleunigung bereits kurze Zeit später überschritten wird, wobei die Überschreitung stattfindet, bevor die Geschwindigkeitsbegrenzungsregelung aktiv und wirksam werden kann. Die Geschwindigkeitsdifferenz Δv stellt somit eine Sicherheitsmarge für die Funktion der Geschwindigkeitsbegrenzungsregelung dar.

Gemäß einer Weiterbildung des Verfahrens wird ein Signal zur Wiederaktivierung der deaktivierten Geschwindigkeitsbegrenzungsregelung erzeugt, wenn das Betätigungselement betätigt wird. Das heißt, dass über das Betätigungselement auch ein Wiedereinschalten der abgeschalteten Geschwindigkeitsbegrenzungsregelung erfolgt. Die Aktivierung soll dabei sowohl stattfinden, wenn das Betätigungselement einmal betätigt wird, als auch dann, wenn es mehrmals hintereinander betätigt wird, wobei zwischen den einzelnen Betätigungen jedoch nicht mehr als ein vorgegebenes Zeitintervall liegen darf.

Weiterhin wird ein Signal zur Deaktivierung der aktivierten Geschwindigkeitsbegrenzungsregelung vorzugsweise dann erzeugt, wenn das Kraftfahrzeug ausgeschaltet wird. Dies stellt sicher, dass bei jedem Starten des Kraftfahrzeugs sich die Geschwindigkeitsbegrenzungsregelung im deaktivierten Zustand befindet.

Es wird ferner eine Eingabevorrichtung zur Eingabe von Geschwindigkeitsgrenzwerten für eine Geschwindigkeitsbegrenzungsregelung eines Kraftfahrzeugs vorgeschlagen, welche dadurch gekennzeichnet ist, dass sie mindestens ein vom Fahrer bedienbares Betätigungselement sowie einen Signaleingang für die Übermittlung eines die aktuelle Fahrzeuggeschwindigkeit v_{act} anzeigenden Signals aufweist. Weiterhin ist die Eingabevorrichtung so eingerichtet, dass sie ein Verfahren der oben erläuterten Art ausführen kann. Nach Betätigung des Betätigungselementes wird somit von der Eingabevorrichtung ein aktueller Geschwindigkeitsgrenzwert vₗᵢₘ eingestellt, der von der aktuellen Fahrzeuggeschwindigkeit v_{act} abhängt.

Darüber hinaus wird ein Verfahren zur Geschwindigkeitsbegrenzungsregelung eines Kraftfahrzeugs vorgeschlagen, wobei als Maßnahmen zur Einhaltung eines vorgegebenen Geschwindigkeitsgrenzwertes vₗᵢₘ vorzugsweise die Reduzierung der Motorleistung und/oder des Motordrehmoments des Kraftfahrzeugs und/oder die Ausübung eines Bremsmoments ergriffen werden, wenn sich die aktuelle Fahrzeuggeschwindigkeit v_{act} dem vorgegebenen Grenzwert vₗᵢₘ nähert oder diesen überschreitet. Das Verfahren ist dadurch gekennzeichnet, dass die genannten Maßnahmen zur Geschwindigkeitsbegrenzungsregelung im Falle von Ausnahmesituationen vorübergehend ausgesetzt werden. Nach Wegfall der Ausnahmesituation treten die Maßnahmen und damit die Geschwindigkeitsbegrenzungsregelung dagegen wieder in Kraft, wenn die übrigen Voraussetzungen für ihre Aktivität noch vorliegen.

Eine Berücksichtigung von Ausnahmesituationen erhöht die Verkehrssicherheit der Geschwindigkeitsbegrenzungsregelung erheblich, da in einem Notfall dem Fahrer die vollständige Kontrolle über das Kraftfahrzeug wieder überlassen wird, ohne dass er zuvor selbst die Geschwindigkeitsbegrenzungsregelung deaktivieren muss. Für eine solche vom Fahrer initiierte Deaktivierung besteht gerade in Ausnahmesituationen nicht die Zeit. Ferner kann sie unter Stressbedingungen leicht vergessen werden.

Für die Definition von Ausnahmesituationen, welche zu einer Aussetzung der Geschwindigkeitsbegrenzungsregelung führen, stehen verschiedene Möglichkeiten zur Verfügung. Gemäß einer ersten Variante liegt eine Ausnahmesituation dann vor, wenn die aktuelle Fahrzeuggeschwindigkeit v_{act} den momentan vorgegebenen Geschwindigkeitsgrenzwert vₗᵢₘ um mehr als einen vorgegebenen Geschwindigkeitsüberschuss vₑₓₜᵣₐ überschreitet: v_{act} > vₗᵢₘ + vₑₓₜᵣₐ. Eine solche Ausnahmesituation kann eintreten, wenn die von der Geschwindigkeitsbegrenzungsregelung ergriffenen Maßnahmen nicht verhindern konnten, dass der vorgegebene Geschwindigkeitsgrenzwert vₗᵢₘ überschritten wurde. Dies kann zum Beispiel bei einer Bergabfahrt des Fahrzeuges der Fall sein. Solange eine solche Geschwindigkeitsüberschreitung vorliegt, werden die Maßnahmen zur Geschwindigkeitsbegrenzung ausgesetzt, damit der Fahrer die alleinige und unbeeinträchtigte Kontrolle über das Fahrzeug erhält. Damit kann z.B. ein Schleudern bei extremen Bergabfahrten, das durch zu starke Verzögerungseingriffe der Geschwindigkeitsbegrenzungsregelung auftreten könnte, vermieden.

Im zuletzt erläuterten Fall werden die Maßnahmen zur Geschwindigkeitsbegrenzungsregelung vorzugsweise um so stärker zurückgenommen, je mehr die Fahrzeuggeschwindigkeit v_{act} den eingestellten Geschwindigkeitsgrenzwert vₗᵢₘ überschreitet. Wenn die Fahrzeuggeschwindigkeit v_{act} um den oben genannten Geschwindigkeitsüberschuss vₑₓₜᵣₐ oberhalb des Geschwindigkeitsgrenzwertes vₗᵢₘ liegt, sind die Maßnahmen zur Geschwindigkeitsbegrenzungsregelung vollständig ausgeschaltet. Auf diese Weise wird gewährleistet, dass die Geschwindigkeitsbegrenzungsregelung in einem Bereich der Fahrzeuggeschwindigkeit zwischen dem vorgegebenen Geschwindigkeitsgrenzwert vₗᵢₘ und einem um den Geschwindigkeitsüberschuss vₑₓₜᵣₐ höheren Wert stetig von 100% auf 0% zurückgefahren wird. Bei einer Verlangsamung der Fahrzeuggeschwindigkeit erfolgt umgekehrt eine entsprechende stetige Einblendung der Maßnahmen zur Geschwindigkeitsbegrenzungsregelung. Dadurch wird sichergestellt, dass kein abrupter Übergang zwischen der Aktivierung und dem Aussetzen der Geschwindigkeitsbegrenzungsregelung stattfindet, welcher das Fahrverhalten des Kraftfahrzeugs negativ beeinflussen könnte.

Gemäß einer anderen Ausgestaltung des Verfahrens liegt eine Ausnahmesituation dann vor, wenn die Position s des Gaspedals und/oder die Rate ds/dt der Positionsveränderung des Gaspedals ein vorgegebenes Kriterium erfüllt, welches auf die Anforderung einer hohen Beschleunigung hinweist. So kann es beispielsweise sein, dass der Fahrer bei einem Überholvorgang oder zur Vermeidung einer kritischen Situation kurzzeitig eine maximale Beschleunigung des Kraftfahrzeugs und eine Überschreitung des vorgegebenen Geschwindigkeitsgrenzwertes bewirken möchte. Dies wäre bei aktivierter Geschwindigkeitsbegrenzungsregelung nicht möglich, da diese das Überschreiten des vorgegebenen Geschwindigkeitsgrenzwertes gerade zu verhindern sucht. Der Fahrer müsste demnach zuvor durch einen entsprechenden Bedienungsvorgang die Geschwindigkeitsbegrenzungsregelung explizit deaktivieren, was jedoch in einer Notsituation nicht nur umständlich und zeitaufwendig ist, sondern insbesondere auch leicht vergessen wird. Aus diesem Grunde wird vorgeschlagen, dass die beobachtete Position und/oder Rate der Positionsveränderung des Gaspedals als Anhaltspunkt dafür genommen werden, dass der Fahrer eine maximale Beschleunigung des Kraftfahrzeugs wünscht. Bei Detektion eines solchen Zustandes kann dann automatisch die Geschwindigkeitsbegrenzungsregelung ausgesetzt werden, bis die Kriterien für die Ausnahmesituation nicht mehr erfüllt sind.

Das Kriterium für das Vorliegen einer Ausnahmesituation kann insbesondere darin bestehen, dass die Position s des Gaspedals jenseits einer vorgegebenen Grenzposition sₗᵢₘ liegt. So kann eine Ausnahmesituation beispielsweise dann angenommen werden, wenn die Position s des Gaspedals zwischen 95% und 100% des Betätigungsweges liegt. Zusätzlich oder alternativ kann auch die Rate ds/dt der Positionsveränderung des Gaspedals bei der Detektion einer Ausnahmesituation verwendet werden. Dabei zeigt ein schnelles Durchtreten des Gaspedals durch eine hohe Rate der Positionsveränderung an, dass voraussichtlich eine maximale Beschleunigung des Kraftfahrzeugs erwünscht ist. Zum Erkennen der Ausnahmesituation muss somit nicht erst abgewartet werden, bis das Gaspedal über eine Grenzposition hinaus durchgedrückt worden ist.

Das Aktivieren und/oder Deaktivieren der Maßnahmen zur Geschwindigkeitsbegrenzungsregelung erfolgt vorzugsweise stetig. Auf diese Weise werden abrupte Übergänge vermieden, welche das Fahrverhalten des Kraftfahrzeugs negativ beeinflussen könnten.

Weiterhin wird eine Regelungsvorrichtung zur Geschwindigkeitsbegrenzungsregelung eines Kraftfahrzeugs vorgeschlagen, welche eine Einrichtung zur Reduzierung der Motorleistung und/oder des Motordrehmoments und/oder zur Ausübung eines Bremsmomentes enthält, wobei diese Einrichtung dann aktiviert wird, wenn sich die aktuelle Fahrzeuggeschwindigkeit v_{act} einem vorgeschriebenen Geschwindigkeitsgrenzwert vₗᵢₘ nähert oder diesen überschreitet. Die Regelungsvorrichtung ist dadurch gekennzeichnet, dass sie zur Ausführung eines Verfahrens der oben erläuterten Art eingerichtet ist. Das heißt, dass von der Regelungsvorrichtung die Maßnahmen zur Geschwindigkeitsbegrenzungsregelung im Falle von Ausnahmesituationen vorübergehend ausgesetzt werden. Die Art der Ausnahmesituationen und ihre Behandlung kann entsprechend den oben erläuterten Varianten des Verfahrens erfolgen.

Die Erfindung betrifft ferner ein Kraftfahrzeug mit einem Motor sowie einer Eingabevorrichtung zur Eingabe von Geschwindigkeitsgrenzwerten für eine Geschwindigkeitsbegrenzungsregelung und mit einer mit der Eingabevorrichtung gekoppelten Regelungsvorrichtung zur Geschwindigkeitsbegrenzungsregelung des Kraftfahrzeugs. Die Eingabevorrichtung und/oder die Regelungsvorrichtung können dabei in einer der oben erläuterten Arten ausgestaltet sein.

Bei diesem Kraftfahrzeug enthält die Eingabevorrichtung vorzugsweise eine Anzeige, welche dem Fahrer die Betriebszustände der Regelungsvorrichtung anzeigt. Insbesondere kann angezeigt werden, ob die Regelungsvorrichtung eingeschaltet oder ausgeschaltet ist oder ob ihre Aktivität vorübergehend aufgrund eines Ausnahmezustandes ausgesetzt ist. Das Aussetzen im Falle eines Ausnahmezustandes wird vorzugsweise über eine besonders auffällige Anzeigeform wie etwa ein Blinken angezeigt.

Das Kraftfahrzeug kann als Motor insbesondere eine Brennkraftmaschine und/oder einen Elektromotor aufweisen. Die Verwendung eines Elektromotors ist deshalb bevorzugt, da sich mit diesem auch ein Bremsmoment ausüben lässt, welches die Geschwindigkeitsbegrenzungsregelung bei ihrer Aufgabe, das Überschreiten eines Geschwindigkeitsgrenzwertes zu verhindern, aktiv unterstützt.

Im Folgenden wird die Erfindung mit Hilfe der Figuren beispielhaft näher erläutert. Es zeigt:
- Fig. 1: schematisch die Komponenten eines Kraftfahrzeugs mit einer Geschwindigkeitsbegrenzungsregelung;
- Fig. 2: ein Diagramm betreffend das Ein- und Ausblenden von Maßnahmen zur Geschwindigkeitsbegrenzungsregelung im Falle eines Überschreitens des vorgegebenen Geschwindigkeitsgrenzwertes;
- Fig. 3: ein Diagramm mit den Zustandsübergängen der Geschwindigkeitsbegrenzungsregelung.

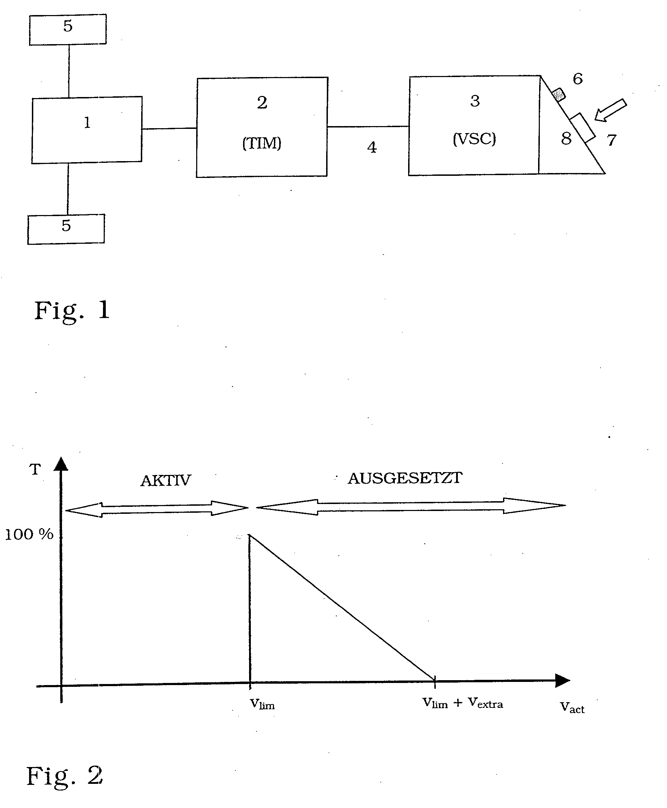

In Figur 1 sind schematisch die Komponenten eines Kraftfahrzeugs dargestellt, mit denen ein System zur Geschwindigkeitsbegrenzungsregelung verwirklicht wird. Das Kraftfahrzeug weist ein Antriebssystem auf, das aus dem Motor 1 und den mit dem Motor gegebenenfalls über ein Getriebe verbundenen Rädern 5 besteht. Im dargestellten Beispiel soll es sich bei dem Motor 1 um einen Elektromotor handeln, wobei die nachfolgenden Ausführungen jedoch in ähnlicher Weise auch für die Verwendung einer Brennkraftmaschine gelten.

Der Motor 1 wird von einem Motorregler 2 (TIM) geregelt. Der Motorregler 2 steht wiederum über eine bidirektionale Verbindungsleitung 4 mit einem Fahrzeugsystemregler 3 (VSC) in Verbindung, welcher für die gesamte Koordination der Kraftübertragung, für die Interaktion mit dem Fahrer und dergleichen verantwortlich ist.

Obwohl in Figur 1 der Motorregler 2 und der Fahrzeugsystemregler 3 als zwei physikalisch getrennte Systeme dargestellt sind, können sie auch in derselben physikalischen Regelungseinheit untergebracht sein. In diesem Falle wäre die Verbindung 4 zum Beispiel eine reine Softwareschnittstelle.

Gewöhnlich ist das dargestellte System jedoch über das gesamte Kraftfahrzeug verteilt angeordnet. Die Kommunikation zwischen dem Motorregler 2 und dem Fahrzeugsystemregler 3 erfordert daher eine physikalische Kommunikationsverbindung 4 wie etwa ein standardisiertes Controller Area Network (CAN).

Die zulässige Fahrzeuggeschwindigkeit wird in zunehmendem Maße durch gesetzliche Vorgaben beschränkt. In Europa sind dabei häufig die Geschwindigkeitslimits von 30, 50 oder 70 km/h anzutreffen. Derartige Geschwindigkeitsgrenzen können bei den vermehrt vorzufindenden Motoren hoher Leistung beziehungsweise hohen Drehmomentes schon bei geringfügigem Druck auf das Gaspedal überschritten werden. Um dies zu verhindern, kommt die nachfolgend näher beschriebene Geschwindigkeitsbegrenzungsfunktion zum Einsatz.

Beim Entwurf einer Geschwindigkeitsbegrenzungsfunktion sind mehrere Aspekte zu beachten. So ist eine steuerungstechnisch einfach zu realisierende Drehmomentbegrenzung für den Motor nicht in allen möglichen Situationen zweckmäßig, da das Drehmoment und die Fahrzeuggeschwindigkeit über den Fahrwiderstand miteinander in Beziehung stehen. Daher wird zum Beispiel bei gleicher Geschwindigkeit bei einer Bergfahrt ein höheres Drehmoment benötigt als bei einer Fahrt in der Ebene.

Weiterhin ist es wünschenswert, dass keine starre Begrenzung der Geschwindigkeit implementiert wird, sondern dass der Fahrer in Notfällen die Möglichkeit behält, den Geschwindigkeitsgrenzwert vorübergehend zu überschreiten, um zum Beispiel ein Überholmanöver sicher ausführen zu können. Darüber hinaus ist es für den Komfort und die Verhinderung von Bedienungsfehlern wünschenswert, dass die Schnittstelle des Systems zum Fahrer möglichst einfach, sicher und transparent funktioniert.

Schließlich muss bei einer Unterteilung der Fahrzeugkontrolle ähnlich wie in Figur 1 gezeigt sichergestellt sein, dass die jeweiligen Kontrollfunktionen den Modulen eindeutig zugeordnet sind und eine Kommunikation zum Beispiel über ein CAN erfolgen kann.

Zur Erreichung der oben genannten Ziele wird der in Figur 1 dargestellte Fahrzeugsystemregler 3 (zusätzlich) mit einer Eingabefunktion ausgestattet, während der Motorregler 2 die (zusätzliche) Funktion einer Geschwindigkeitsbegrenzungsregelung bekommt. Zunächst soll die Funktion der Eingabevorrichtung 8 näher erläutert werden.

Die an der Eingabevorrichtung 8 ausgebildete Schnittstelle zum Fahrer besteht im Wesentlichen aus einem Knopf 7, welchen der Fahrer durch Drücken betätigen kann, sowie einer Signallampe 6 (LED). Durch ein- oder mehrfache Betätigung des Knopfes 7 kann der Fahrer verschiedene Einstellungen betreffend die Geschwindigkeitsbegrenzungsregelung vornehmen. Die Reaktion der Eingabevorrichtung 8 auf eine Betätigung des Betätigungselementes 7 hängt dabei wesentlich von der aktuellen Fahrzeuggeschwindigkeit v_{act} ab, welche der Eingabevorrichtung 8 über Signalleitungen 4 vom Motorregler 2 mitgeteilt wird. Die folgende Tabelle gibt die Reaktionen der Eingabevorrichtung 8 auf Betätigungen der Taste 7 bei verschiedenen Fahrzeuggeschwindigkeiten v_{act} wieder:

| Aktion | | Signal 6 | Fahrzeuggeschwindigkeit v_{act} [km/h] | | |
|---|---|---|---|---|---|
| | | | < 30 | < 50 | > 50 |
| | | | w **Gewählte v**_{**lim**}**[km/h]** | | |
| 1) | Fahrzeugstart | **Aus** | **-** | **-** | **-** |
| 2) | Fahrer drückt Taste 7 | **An** | **30** | **50** | **V**_{**act**}**+Δv** |
| 3) | Fahrer drückt Taste 7 kurz nach 2) erneut | **An** | **50** | **50** | **V**_{**act**}**+Δv** |
| 4) | Fahrer drückt Taste 7 längere Zeit nach 2) oder 3) oder Fahrer drückt Taste 7 erneut: kurz nach 3) | **Aus** | **-** | **-** | **-** |

Beim Start des Kraftfahrzeugs durch Drehen des Zündschlüssels ist die Geschwindigkeitsbegrenzungsfunktion somit außer Kraft gesetzt, weshalb die Signallampe 6 dunkel bleibt. Der Fahrer hat die vollständige Kontrolle über das Drehmoment und die Leistung der Kraftübertragung.

Wenn der Fahrer die Taste 7 einmal drückt, wird die Geschwindigkeitsbegrenzungsregelung aktiviert, und als Geschwindigkeitsgrenzwert wird ein Wert festgelegt, der wie folgt von der aktuellen Geschwindigkeit v_{act} abhängt:
Wenn v_{act} kleiner als 30 km/h ist, wird der Geschwindigkeitsgrenzwert auf 30 km/h gesetzt. Wenn v_{act} zwischen 30 km/h und 50 km/h liegt, wird der Geschwindigkeitsgrenzwert auf 50 km/h gesetzt. Liegt v_{act} dagegen oberhalb 50 km/h, wird der Geschwindigkeitsgrenzwert auf die aktuelle Fahrzeuggeschwindigkeit v_{act} plus einer Geschwindigkeitsdifferenz Δv gesetzt. Δv kann auf verschiedene Weise berechnet werden. Im einfachsten Falle ist Δv konstant, zum Beispiel Δv = 5 km/h. Ein fortgeschrittenerer Ansatz besteht darin, dass die momentane Fahrzeugbeschleunigung berücksichtigt wird, um Δv entsprechend zu erhöhen oder zu verringern. Der Zweck von Δv besteht darin zu verhindern, dass die Fahrzeuggeschwindigkeit den eingestellten Geschwindigkeitsgrenzwert gerade in der Phase übersteigt, während welcher die Geschwindigkeitsbegrenzungsregelung vom deaktivierten in den aktivierten Zustand umschaltet.

Wie aus der Tabelle weiter hervorgeht, wird bei mehrfacher Betätigung der Taste 7 danach unterschieden, ob die Betätigungen schnell hintereinander erfolgen oder ob zwischen zwei Betätigungen ein vorgegebenes Zeitintervall überschritten wird.

Im Folgenden soll die Funktion der Geschwindigkeitsbegrenzungsregelung, welche im Motorregler 2 implementiert ist, näher beschrieben werden. Die Geschwindigkeitsbegrenzungsregelung kann aktiviert oder deaktiviert werden, was in der oben erläuterten Weise über die Eingabevorrichtung 8 erfolgt. Wenn die Geschwindigkeitsbegrenzungsregelung grundsätzlich aktiviert ist, überwacht sie den Fahrzeugzustand und greift in das Fahrgeschehen ein, wenn die aktuelle Fahrzeuggeschwindigkeit v_{act} und die Position s des Gaspedals bestimmte Kriterien erfüllen. Zunächst sei dabei die Auswirkung der aktuellen Fahrzeuggeschwindigkeit v_{act} betrachtet.

Üblicherweise liegt die aktuelle Fahrzeuggeschwindigkeit v_{act} unterhalb des eingestellten Geschwindigkeitsgrenzwertes vₗᵢₘ. Ein Eingreifen der Geschwindigkeitsbegrenzungsregelung ist dann nicht erforderlich, wenngleich diese grundsätzlich überwachend aktiv ist, da von der Eingabevorrichtung 8 ein entsprechendes Aktivierungs-Flag übermittelt worden ist.

Wenn nun der Fahrer versucht, das Fahrzeug über den vorgegebenen Geschwindigkeitsgrenzwert vₗᵢₘ hinaus zu beschleunigen, reduziert oder begrenzt der Motorregler 2 das Drehmoment so, dass der Geschwindigkeitsgrenzwert nicht überschritten wird. Dabei kann vorzugsweise auch ein bremsendes Drehmoment ausgeübt werden, wenn dies wie etwa bei dem Elektromotor 1 möglich ist.

Es kann z.B. bei einer Bergabfahrt die Situation eintreten, dass die Geschwindigkeitsbegrenzungsregelung nicht in der Lage ist, die Fahrzeuggeschwindigkeit unter dem vorgegebenen Geschwindigkeitsgrenzwert zu halten. Wenn die Fahrzeuggeschwindigkeit dann den Geschwindigkeitsgrenzwert vₗᵢₘ überschreitet, wird der Zustand der Geschwindigkeitsbegrenzungsregelung von AKTIV auf AUSGESETZT geändert. Der entsprechende Übergang ist in Figur 2 dargestellt, wobei auf der horizontalen Achse die aktuelle Fahrzeuggeschwindigkeit v_{act} und auf der vertikalen Achse das maximal erlaubte Bremsmoment T dargestellt ist. Wie aus dem Diagramm hervorgeht, wird das anwendbare maximale Drehmoment T nach Überschreiten des Geschwindigkeitsgrenzwertes vₗᵢₘ von 100% rampenförmig auf 0% reduziert beziehungsweise "ausgeblendet", wobei die vollständige Ausblendung bei der Geschwindigkeit vₗᵢₘ + vₑₓₜᵣₐ erfolgt. Jenseits dieser Geschwindigkeit ist somit die Geschwindigkeitsbegrenzungsregelung nicht mehr wirksam, und der Fahrer hat die alleinige Kontrolle über das Fahrzeug. Wenn sich anschließend die Fahrzeuggeschwindigkeit v_{act} wieder verringert, wird in Umkehrung dieses Vorganges das maximal anwendbare Drehmoment T und damit die Geschwindigkeitsbegrenzungsregelung wieder stetig von 0% auf 100% "eingeblendet". Unterhalb des Geschwindigkeitsgrenzwertes vₗᵢₘ geht der Zustand der Geschwindigkeitsbegrenzungsregelung dann wieder von AUSGESETZT auf AKTIV über.

Das beschriebene Verhalten berücksichtigt somit eine Ausnahmesituation, die in dem Überschreiten des vorgegebenen Geschwindigkeitsgrenzwertes vₗᵢₘ besteht, wobei während der Ausnahmesituation die Maßnahmen der Geschwindigkeitsbegrenzungsregelung in einem gleitenden Übergang aus- und eingeblendet werden.

Eine weitere Ausnahmesituation wird über den Zustand des Gaspedals definiert. Die Position s des Gaspedals wird dabei zum Beispiel durch einen normierten Wert zwischen 0% und 100% ausgedrückt, wobei s = 100% einem vollständig durchgetretenen Gaspedal entspricht. Wenn sich die Position s des Gaspedals unterhalb eines vorgegebenen Grenzwertes sₗᵢₘ befindet, wird die Geschwindigkeitsbegrenzungsregelung nicht beeinflusst. Im Falle einer Notsituation ist es jedoch möglich, dass der Fahrer ein maximales Drehmoment benötigt und den vorgegebenen Geschwindigkeitsgrenzwert überschreiten möchte. Daher wird die Funktion der Geschwindigkeitsbegrenzungsregelung vorübergehend ausgesetzt, wenn die Position s des Gaspedals die vorgegebene Schwelle sₗᵢₘ überschreitet. Der Grenzwert sₗᵢₘ kann dabei vorgegeben sein oder während der Fahrt berechnet werden.

Ferner kann auch die Änderungsrate ds/dt der Position s verwendet werden, um eine schnellere Antwort und Identifikation der Ausnahmesituation zu erlauben. Während der durch das Gaspedal indizierten Ausnahmesituation wird die Geschwindigkeitsbegrenzungsregelung ähnlich wie oben für die Fahrzeuggeschwindigkeiten erläutert vom Zustand AKTIV zum Zustand AUSGESETZT umgeschaltet.

Durch eine entsprechende Filterung wie zum Beispiel einen P-T1 Filter sollte dabei sichergestellt werden, dass das Drehmoment bei dem Aussetzen keinen Sprung macht. Ein derartiger Sprung würde stattfinden, wenn die Geschwindigkeitsbegrenzungsfunktion bis zum Erreichen der Pedalposition sₗᵢₘ eine Drehmomentreduzierung ausüben würde, welche anschließend sprunghaft wegfiele.

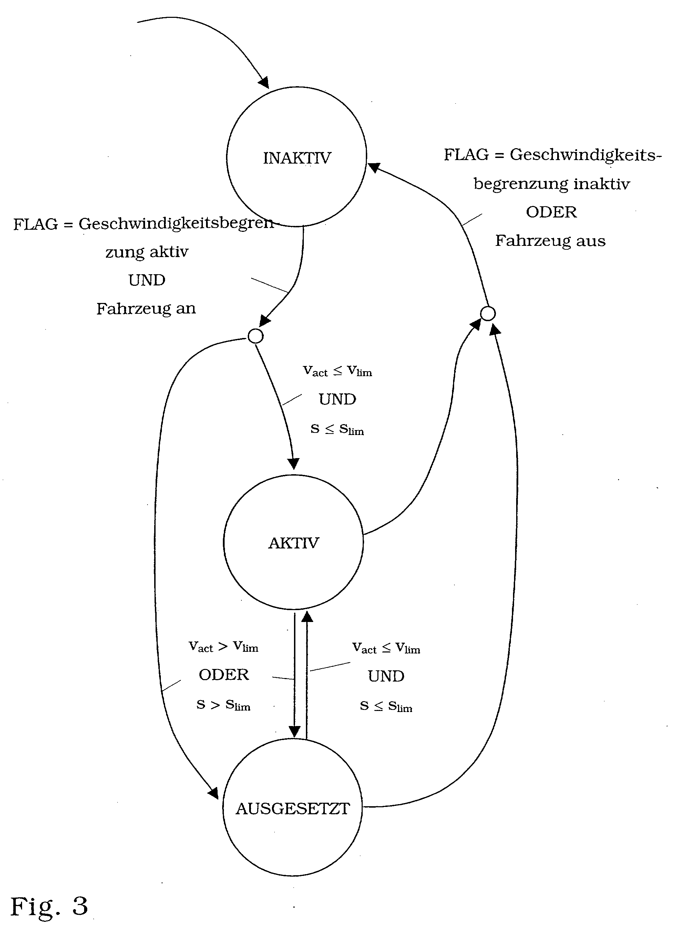

Figur 3 zeigt ein Zustandsdiagramm für die Geschwindigkeitsbegrenzungsregelung, die im Motorregler 2 implementiert ist. Vom ausgeschalteten Zustand INAKTIV geht die Geschwindigkeitsbegrenzungsregelung in den eingeschalteten Zustand AKTIV über, wenn von der Eingabevorrichtung 8 (Figur 1) ein Aktivierungs--Flag gesetzt wird und das Fahrzeug angelassen ist.

Wie oben erläutert wurde, wird der Zustand AKTIV in Ausnahmesituationen vorübergehend durch Übergang in den Zustand AUSGESETZT verlassen. Ein solcher Übergang findet statt, wenn die aktuelle Fahrzeuggeschwindigkeit v_{act} größer als der vorgeschriebene Geschwindigkeitsgrenzwert vₗᵢₘ ist oder wenn die Position s des Gaspedals einen Grenzwert sₗᵢₘ überschreitet. Falls die genannten Bedingungen schon bei Verlassen des Zustandes INAKTIV vorliegen, findet von dort unmittelbar ein Übergang in den Zustand AUSGESETZT statt.

Sobald die Voraussetzungen für den Zustand AUSGESETZT nicht mehr vorliegen, wird dieser durch einen Rücksprung in den Zustand AKTIV verlassen. In diesem Zusammenhang erweist sich die kombinierte Überwachung der Gaspedalposition bzw. der Pedalgeschwindigkeit zusammen mit der Überwachung der Fahrzeuggeschwindigkeit als besonders vorteilhaft (wenngleich beide Überwachungskriterien auch nur einzeln implementiert sein können): Beispielsweise wird zur Einleitung eines überholbedingten Beschleunigungsvorganges zunächst das Gaspedal durchgetreten bzw. sehr schnell betätigt, so dass in den Zustand AUSGESETZT übergegangen wird. Die Beschleunigung hat eine Fahrzeuggeschwindigkeit zur Folge, die häufig oberhalb von vₗᵢₘ liegt, so dass der Zustand AUSGESETZT auch bei Loslassen des Gaspedals zunächst noch beibehalten wird und das System mit sinkender Geschwindigkeit unmerklich und kontinuierlich wieder in den Zustand AKTIV übergeht.

Falls von der Eingabevorrichtung 8 das Aktivierungs-Flag für die Geschwindigkeitsbegrenzungsregelung zurückgenommen wird oder falls das Fahrzeug ausgeschaltet wird, findet aus den Zuständen AKTIV beziehungsweise AUSGESETZT ein Rücksprung in den Zustand INAKTIV statt.

Die in dem Zustandsdiagramm von Figur 3 dargestellten Übergänge sind derartig implementiert, dass sie stetig und ohne abrupte Übergänge im Fahrzeugverhalten stattfinden.

Im Folgenden wird ein typisches Einsatzszenario für die Geschwindigkeitsbegrenzungsregelung nach Figur 1 beschrieben. Zunächst aktiviert der Fahrer die Geschwindigkeitsbegrenzungsfunktion durch Betätigung der Taste 7. Daraufhin liest die Eingabevorrichtung 8 die aktuelle Fahrzeuggeschwindigkeit V_{act} und berechnet den Geschwindigkeitsgrenzwert vₗᵢₘ. Dieser wird zusammen mit einer Aktivierungsanforderung an den Motorregler 2 übermittelt. Der Motorregler 2 kontrolliert dann unter Verwendung positiver und negativer Motordrehmomente den Motor so, dass der vorgegebene Geschwindigkeitsgrenzwert vₗᵢₘ nicht überschritten wird.

Die Eingabevorrichtung 8 übermittelt ferner den Grenzwert sₗᵢₘ der Position des Gaspedals, welcher von dem Motorregler 2 dazu verwendet wird, gegebenenfalls in den Zustand AUSGESETZT umzuschalten.

Die in Figur 3 dargestellten Zustände der Geschwindigkeitsbegrenzungsregelung werden der Eingabevorrichtung 8 über die Verbindung 4 übermittelt. Der jeweilige Zustand wird dann von der Signallampe 6 entsprechend der folgenden Tabelle symbolisiert, um den Fahrer über die Funktion der Geschwindigkeitsbegrenzungsregelung zu informieren.

| Zustand | Signallampe |
|---|---|
| AKTIV | an |
| INAKTIV | aus |
| AUSGESETZT | blinkend |

Die Kommunikation zwischen der Eingabevorrichtung 8 und der Geschwindigkeitsbegrenzungsregelung 2 findet über die Kommunikationsschnittstelle 4 statt. Diese wird durch eine Menge von Variablen dargestellt, welche entweder über eine physikalische Kommunikationsverbindung (zum Beispiel CAN) oder über eine reine Softwareschnittstelle übermittelt werden. Typischerweise finden dabei folgende Datenformate Anwendung:
Signale von der Eingabevorrichtung 8 an den Motorregler 2:
a) Geschwindigkeitsgrenzwert vₗᵢₘ:
   1-Bytevariable, Auflösung 1 km/h;
b) Geschwindigkeitsbegrenzung aktiv:
   1-Byte-Flag, AAh=TRUE, 00=FALSE;
Kommunikation vom Motorregler 2 zur Eingabevorrichtung 8:
a) Status der Geschwindigkeitsbegrenzungsregelung:
   1-Byte-Variable, Zustände: INAKTIV, AKTIV, AUSGESETZT.

## Patentansprüche

1. Verfahren zur Eingabe von Geschwindigkeitsgrenzwerten für die Geschwindigkeitsbegrenzungsregelung eines Kraftfahrzeugs,
**dadurch gekennzeichnet, dass** nach Betätigung eines Betätigungselementes (7) ein aktueller Geschwindigkeitsgrenzwert (vₗᵢₘ) eingestellt wird, der von der aktuellen Fahrzeuggeschwindigkeit (v_{act}) abhängt.

2. Verfahren nach Anspruch 1,
**dadurch gekennzeichnet, dass** als aktueller Geschwindigkeitsgrenzwert (vₗᵢₘ) wenn möglich derjenige von vorgegebenen Geschwindigkeitsgrenzwerten (v₃₀, v₅₀) ausgewählt wird, welcher am dichtesten bei der aktuellen Fahrzeuggeschwindigkeit (v_{act}) liegt und gleichzeitig größer als diese ist.

3. Verfahren nach Anspruch 2,
**dadurch gekennzeichnet, dass** nach jeder weiteren, innerhalb eines vorgegebenen Zeitintervalls erfolgenden Betätigung des Betätigungselementes (7) wenn möglich der gegenüber dem letzten ausgewählten Geschwindigkeitsgrenzwerten (v₃₀) nächst größere (v₅₀) der vorgegebenen Geschwindigkeitsgrenzwerte als aktueller Geschwindigkeitsgrenzwert (vₗᵢₘ) ausgewählt wird.

4. Verfahren nach Anspruch 3,
**dadurch gekennzeichnet, dass** nach einer weiteren, innerhalb eines vorgegebenen Zeitintervalls erfolgenden Betätigung des Betätigungselementes (7) ein Signal zur Deaktivierung der aktivierten Geschwindigkeitsbegrenzungsregelung erzeugt wird, wenn kein nächst größerer vorgegebener Geschwindigkeitsgrenzwert zur Auswahl zur Verfügung steht.

5. Verfahren nach einem der Ansprüche 1 bis 4,
**dadurch gekennzeichnet, dass** ein Signal zur Deaktivierung der aktivierten Geschwindigkeitsbegrenzungsregelung erzeugt wird, wenn das Betätigungselement (7) nach Ablauf eines vorgegebenen Zeitintervalls erneut betätigt wird.

6. Verfahren nach einem der Ansprüche 1 bis 5,
**dadurch gekennzeichnet, dass** nach Betätigung des Betätigungselementes (7) als aktueller Geschwindigkeitsgrenzwert (vₗᵢₘ) die aktuelle Fahrzeuggeschwindigkeit (v_{act}) plus einer Geschwindigkeitsdifferenz (Δv) eingestellt wird.

7. Verfahren nach Anspruch 6,
**dadurch gekennzeichnet, dass** die Geschwindigkeitsdifferenz (Δv) unter Berücksichtigung der momentanen Beschleunigung des Kraftfahrzeugs so gewählt wird, dass die Fahrzeuggeschwindigkeit bis zum Wirksamwerden der Geschwindigkeitsbegrenzungsregelung den eingestellten Geschwindigkeitsgrenzwert (Vₗᵢₘ) nicht überschreitet.

8. Verfahren nach mindestens einem der Ansprüche 1 bis 7,
**dadurch gekennzeichnet, dass** ein Signal zur Aktivierung der deaktivierten Geschwindigkeitsbegrenzungsregelung erzeugt wird, wenn das Betätigungselement (7) betätigt wird.

9. Verfahren nach mindestens einem der Ansprüche 1 bis 8,
**dadurch gekennzeichnet, dass** ein Signal zur Deaktivierung der aktivierten Geschwindigkeitsbegrenzungsregelung erzeugt wird, wenn das Kraftfahrzeug ausgeschaltet wird.

10. Eingabevorrichtung (8) zur Eingabe von Geschwindigkeitsgrenzwerten für eine Geschwindigkeitsbegrenzungsregelung (2) eines Kraftfahrzeugs,
**dadurch gekennzeichnet, dass** diese mindestens ein vom Fahrer bedienbares Betätigungselement (7) sowie einen Signaleingang (4) für die Übermittlung eines die aktuelle Fahrzeuggeschwindigkeit (v_{act}) anzeigenden Signals aufweist, und dass diese derart eingerichtet ist, dass diese ein Verfahren nach einem der Ansprüche 1 bis 9 ausführen kann.

11. Kraftfahrzeug, enthaltend einen Motor (1) und eine Eingabevorrichtung (8) nach Anspruch 10 zur Eingabe von Geschwindigkeitsgrenzwerten (vₗᵢₘ) sowie eine damit gekoppelte Regelungsvorrichtung (2) zur Geschwindigkeitsbegrenzungsregelung des Kraftfahrzeugs.

12. Kraftfahrzeug nach Anspruch 11,
**dadurch gekennzeichnet, dass** die Eingabevorrichtung (8) eine Anzeige (6) enthält, welche die Betriebszustände der Regelungsvorrichtung (2) anzeigt.

13. Kraftfahrzeug nach Anspruch 11 oder 12,
**dadurch gekennzeichnet, dass** als Motor (1) eine Brennkraftmaschine und/oder ein Elektromotor vorgesehen ist.
